(19) Europäisches Patentamt / European Patent Office / Office européen des brevets

(11) **EP 2 905 352 B1**

(12) **EUROPEAN PATENT SPECIFICATION**

(45) Date of publication and mention of the grant of the patent:
**04.04.2018 Bulletin 2018/14**

(21) Application number: **12886048.3**

(22) Date of filing: **03.10.2012**

(51) Int Cl.:
*C22C 38/00* (2006.01)    *C21D 9/52* (2006.01)
*C22C 38/22* (2006.01)    *C22C 38/24* (2006.01)
*F16J 9/26* (2006.01)    *C21D 6/00* (2006.01)
*C21D 8/06* (2006.01)    *C21D 1/18* (2006.01)
*C22C 38/02* (2006.01)    *C22C 38/04* (2006.01)

(86) International application number:
**PCT/JP2012/075643**

(87) International publication number:
**WO 2014/054130 (10.04.2014 Gazette 2014/15)**

(54) **WIRE FOR PISTON RINGS**

DRAHT FÜR KOLBENRINGE

FIL MÉTALLIQUE POUR SEGMENTS DE PISTON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.08.2015 Bulletin 2015/33**

(73) Proprietors:
• **Tokusen Kogyo Co., Ltd**
  **Ono-City, Hyogo 675-1361 (JP)**
• **Nippon Koshuha Steel Co., Ltd.**
  **Tokyo 101-0032 (JP)**

(72) Inventors:
• **KAMON Ryouichi**
  **Ono-city, Hyogo 675-1361 (JP)**
• **MIZUNO Yukitaka**
  **Tokyo 101-0032 (JP)**

(74) Representative: **Manitz Finsterwald Patentanwälte PartmbB**
  **Martin-Greif-Strasse 1**
  **80336 München (DE)**

(56) References cited:
EP-A1- 0 799 902    EP-A1- 2 011 892
WO-A1-2007/123164    JP-A- S5 845 357
JP-A- H02 259 048    JP-A- H05 186 854
JP-A- H06 221 436    JP-A- H06 221 436
JP-A- H11 106 874    JP-A- 2008 057 478
US-A1- 2008 053 396    US-B1- 6 224 687

**Description**

TECHNICAL FIELD

The present invention relates to wires for piston rings of an internal combustion engine, a compressor, and the like. Specifically, the present invention relates to wires made of steel.

BACKGROUND ART

Conventionally, piston rings made of cast iron have been used for internal combustion engines such as a vehicle engine and the like. In recent years, piston rings made of steel have been widespread. Piston rings made of steel are excellent in strength. Piston rings made of steel can easily be manufactured.

A wire is used for manufacturing piston rings made of steel. In manufacturing of the wire, first, an ingot having a predetermined composition is obtained. Hot rolling, annealing, cold drawing, cold rolling, and the like are performed on the ingot to obtain an raw wire. Quenching and tempering are performed on the raw wire to obtain a wire for piston rings.

Bending is performed on the wire. The bending is referred to as coiling. After the coiling, the wire is cut. Each cut wire has substantially a ring shape. As a result of the coiling and the cutting, one end and another end of the wire face each other. This portion is referred to as end gap. The one end and the other end of the wire are spaced apart from each other. In other words, a space is present at the end gap. Stress relief annealing is performed on the wire. Furthermore, nitriding is performed on the wire. A piston ring is obtained through these steps.

When a ring having an inappropriate end gap width is mounted on a cylinder, the tension is inappropriate. At a piston having inappropriate ring tension, the blow-by amount is large. An internal combustion engine including the piston has low combustion efficiency.

The diameter of the ring is reduced or increased due to the above-described stress relief annealing and nitriding. Due to the diameter reduction and the diameter increase, the width of the end gap is changed. Specifically, if the diameter of the ring is reduced, the width of the end gap is decreased, and if the diameter of the ring is increased, the width of the end gap is increased. The width before the change is determined such that the width after the change has an appropriate value. In other words, the width before the change is determined in consideration of a change ratio. In a wire having a high change ratio, the change ratio is likely to vary. Therefore, the width of the end gap after change is also likely to vary. From the wire having a high change ratio, a piston ring having an inappropriate end gap width may be obtained.

JP2005-344134 discloses a wire which is less likely to cause diameter reduction of a ring. From the wire, a piston ring having an appropriate end gap width can be obtained.

US 6,224,687 B1 discloses a piston ring material, which shall have an excellent scuffing resistance and workability, and which consists, by weight, of 0.2 to 0.7% C, 5.0 to 25.0% Cr and the balance Fe and incidental impurities, and having a $M_7C_3$ carbide content in the structure of not more than 4.0% in terms of area percent. JP H06-221,436 A relates to a cast steel piston ring material, which is composed of 0.6 to 1.0% of C, 2.0% or less of Si, 2.0% or less of Mn, 0.05% or less of P, 0.10% or less of S, 10 to 14% of Cr, 0.2 to 1.5% of Mo, 0.03 to 0.15% of V which are all in weight ratio, and remainder being practically Fe and impurities.

JP H06-259,048 A describes a sliding member containing., by weight, 0.8 to 1.5% C, 1.0 to 2.0% Si, 0.5 to 1.0% Mn, 7.5 to 15.0% Cr, 0.8 to 1.5% Mo, 0.1 to 2% V, 2.0 to 10.0% Co and the balance iron with inevitable impurities.

CITATION LIST

PATENT LITERATURE

Patent Literature 1: JP2005-344134

SUMMARY OF THE INVENTION

PROBLEMS TO BE SOLVED BY THE INVENTION

The wire disclosed in JP2005-344134 contains a large amount of Ni and Cr. The wire is expensive.

During coiling, a crack may occur in a wire. During coiling, the wire may be broken. A wire which is excellent in processability during coiling is desired.

An object of the present invention is to provide a wire for piston rings which is less likely to cause a width of an end gap of a piston ring to be varied, is excellent in processability during coiling, and is obtained at low cost.

SOLUTION TO THE PROBLEMS

The present inventor has found that when a tempering temperature in a process of manufacturing a wire is set high, change of the width of an end gap in thermal treatment in a process of manufacturing a piston ring is suppressed. Meanwhile, the hardness of a wire which is tempered at a high temperature is low. A piston ring obtained from the wire is inferior in strength. The present inventor has found that by adjusting the composition and the structure of a wire, even when the wire is tempered at a high temperature, a wire having an appropriate hardness is obtained.

A wire for piston rings according to the present invention is made of steel which consists of:

0.50 to 0.80% by weight of C,
0.05 to 1.00% by weight of Si,
0.2 to 1.00% by weight of Mn,
11.0 to 14.0% by weight of Cr,
0.20 to 2.0% by weight of Mo,
0.03 to 0.15% by weight of V,

and the remaining portion being Fe and impurities, of which P is limited to 0.05% by weight, S is limited to 0.03% by weight and N is limited to 0.04% by weight,
an area ratio of carbide particles having a circle-equivalent diameter of 0.2 $\mu$m or greater but 5 $\mu$m or less in a structure in a transverse section of the wire is equal to or less than 10%, and
a Vickers hardness of the wire is equal to or greater than 350 but equal to or less than 450.

Preferably, an amount of Mo in the steel is equal to or greater than 0.80% by weight but equal to or less than 1.20% by weight.

Preferably, a density of the carbide particles having a circle-equivalent diameter of 0.2 $\mu$m or greater but 5 $\mu$m or less in the structure in the transverse section is equal to or less than 250 particles/1000 $\mu$m$^2$.

The wire can be obtained through quenching and tempering. Preferably, a temperature of the tempering is equal to or higher than 645°C.

ADVANTAGEOUS EFFECTS OF THE INVENTION

With the wire for piston rings according to the present invention, a change of the width of an end gap which is caused by thermal treatment after bending is small. Therefore, variation of the width of the end gap is small. The Vickers hardness of the wire is appropriate, and thus the wire is excellent in processability during coiling. Furthermore, the amount of Cr in the steel for the wire is small, and thus the wire can be obtained at low cost.

BRIEF DESCRIPTION OF THE DRAWINGS

[FIG. 1] FIG. 1 is a perspective view showing a portion of a wire for piston rings according to one embodiment of the present invention.
[FIG. 2] FIG. 2 is a perspective view showing a state of the wire in FIG. 1 after bending.
[FIG. 3] FIG. 3 is a plan view showing the wire in FIG. 2.
[FIG. 4] FIG. 4 is a cross-sectional view showing a wire according to Example 1 of the present invention.

DESCRIPTION OF EMBODIMENTS

The following will describe in detail the present invention based on preferred embodiments with appropriate reference to the drawings.

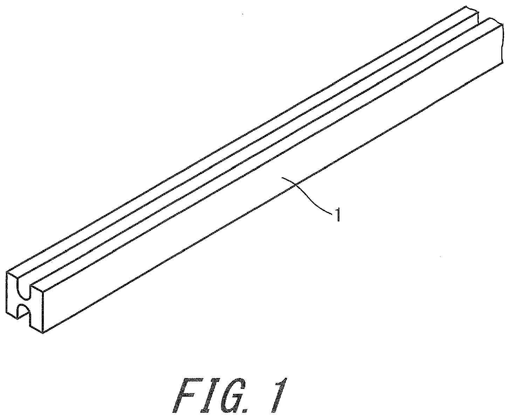

A wire 1 for piston rings shown in FIG. 1 is made of steel. In manufacturing of the wire 1, first, an ingot is obtained by ingoting. Hot rolling, annealing, cold drawing, and cold rolling are performed on the ingot to obtain an raw wire. Quenching and tempering are performed on the raw wire.

Coiling is performed on the wire 1.

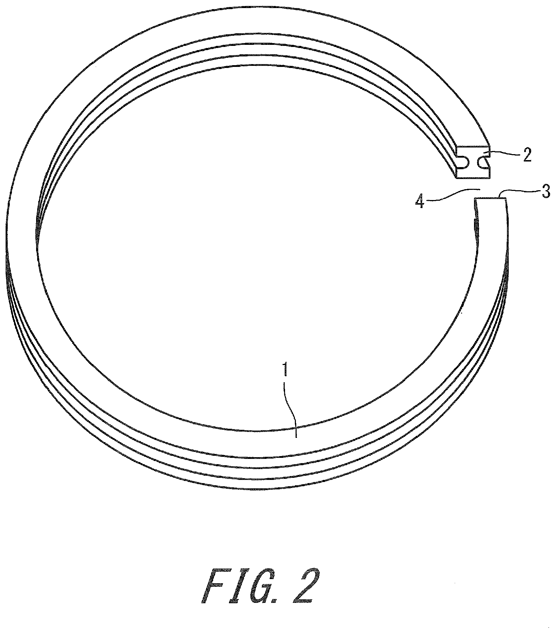

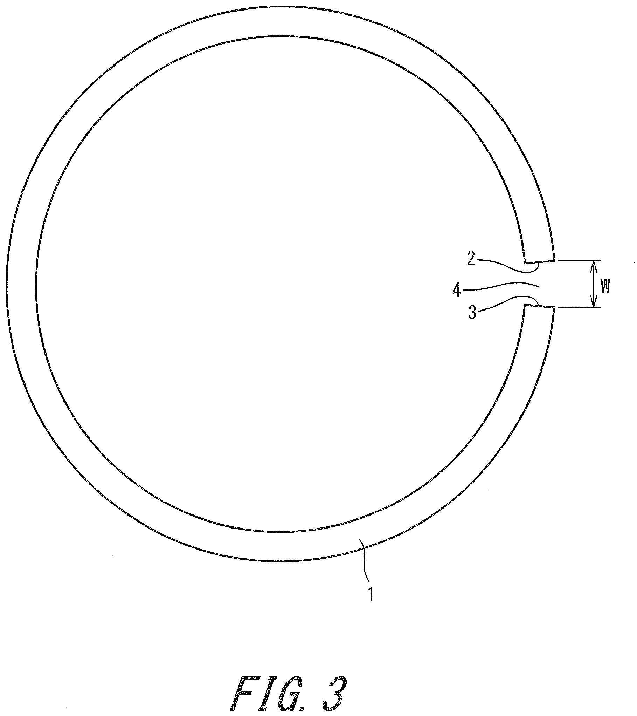

Furthermore, the wire 1 is cut. As shown in FIGS. 2 and 3, the cut wire 1 has substantially a ring shape. As a result of the coiling and the cutting, one end 2 and another end 3 of the wire 1 face each other. A portion between the one end 2 and the other end 3 is referred to as end gap 4. The one end 2 and the other end 3 are spaced apart from each other. In FIG. 3, an arrow W indicates the width of the end gap 4.

After the cutting, thermal treatment is performed on the wire 1. Typically, stress relief annealing and nitriding are performed on the wire 1. Through these thermal treatments, a piston ring is obtained. Due to the thermal treatments, the width W of the end gap 4 is changed. A change ratio P1 (absolute value) is calculated by the following mathematical formula.

[Math. 1]

$$P1 = |(W1 - W2) / W1 * 100|$$

In the above mathematical formula, W1 represents the width of the end gap 4 before the thermal treatments, and W2 represents the width of the end gap 4 after the thermal treatments. The width W1 is set such that an appropriate width W2 is achieved.

The lower the change ratio P1 is, the less the width W2 is varied. As described above, the wire 1 is obtained by performing quenching and tempering on the raw wire. According to the finding by the present inventor, the higher the temperature of the tempering is, the lower the change ratio P1 in the subsequent thermal treatments is. Even if the temperature of the tempering is high, the wire 1 has a sufficient hardness by making the composition and the structure of the wire 1 appropriate.

From the standpoint that a wire 1 having a low change ratio P1 is obtained, the tempering temperature is preferably equal to or higher than 645°C, more preferably equal to or higher than 650°C, and particularly preferably equal to or higher than 660°C. In light of strength of the piston ring, the tempering temperature is preferably equal to or lower than 700°C.

The composition of the steel for the wire 1 is as follows.
0.50 to 0.80% by weight of C,
0.05 to 1.00% by weight of Si,
0.2 to 1.00% by weight of Mn,
11.0 to 14.0% by weight of Cr,
0.20 to 2.0% by weight of Mo,
0.03 to 0.15% by weight of V,
Remaining portion: Fe and unavoidable impurities

C is an intrusion type solid solution element. Steel containing an appropriate amount of C has a high hardness. C contributes to the strength of the steel. Furthermore, C causes a carbide to be generated in a structure. The carbide contributes to the wear resistance of the steel. From these standpoints, the amount of C is equal to or greater than 0.50% by weight and particularly preferably equal to or greater than 0.60% by weight. In light of controlling crystallization of an eutectic carbide and in light of cold processability of the wire 1, the amount is equal to or less than 0.80% by weight and particularly preferably equal to or less than 0.70% by weight.

Si serves as a deoxidizer during refining. Steel containing an appropriate amount of Si has a high hardness. Si contributes to the strength of the steel. From these standpoints, the amount of Si is equal to or greater than 0.05% by weight and particularly preferably equal to or greater than 0.10% by weight. In light of cold processability of the wire 1, the amount is equal to or less than 1.00% by weight and particularly preferably equal to or less than 0.50% by weight.

Mn serves as a deoxidizer during production of the ingot. Furthermore, Mn suppresses an adverse effect of S which is an impurity. From these standpoints, the amount of Mn is equal to or greater than 0.20% by weight and particularly preferably equal to or greater than 0.40% by weight. In light of hot processability of the wire 1 and in light of corrosion resistance of the piston ring, the amount is equal to or less than 1.00% by weight and particularly preferably equal to or less than 0.80% by weight.

A piston ring containing Cr is excellent in corrosion resistance. A piston ring made of steel in which Cr is solid-dissolved is excellent in thermal settling resistance. Thermal settling is a phenomenon that when the piston ring is used at a high temperature, the tension of the piston ring is decreased due to creep. The decrease in tension impairs the sealing performance of the piston ring. Cr binds to C to form a carbide. Furthermore, Cr forms a nitride to enhance the wear resistance of the piston ring. From these standpoints, the amount of Cr is equal to or greater than 11.0% by weight and particularly preferably equal to or greater than 12.0% by weight. In light of cold processability of the wire 1 and in light of cost of the piston ring, the amount is equal to or less than 14.0% by weight and particularly preferably equal to or less than 13.0% by weight.

As described above, the wire 1 is obtained through the quenching and the tempering. The wire 1 containing Mo has a sufficient hardness after the tempering. A piston ring obtained from the wire 1 is excellent in strength. Mo binds to C to form a carbide. The carbide contributes to the wear resistance of the piston ring. From these standpoints, the amount of Mo is equal to or greater than 0.20% by weight and particularly preferably equal to or greater than 0.80% by weight. In light of cold processability of the wire 1, the amount is equal to or less than 2.0% by weight and particularly preferably equal to or less than 1.2% by weight.

A typical impurity is P. P segregates at a crystal grain boundary. P impairs the hot processability of the steel.

Furthermore, P decreases the fatigue strength of the piston ring. From these standpoints, it is more preferable if the amount of P is smaller. Specifically, the amount is equal to or less than 0.05% by weight and particularly preferably equal to or less than 0.03% by weight.

Another typical impurity is S. S binds to Mn or the like to form an inclusion. The inclusion decreases the fatigue strength of the piston ring. Furthermore, the inclusion impairs the corrosion resistance of the piston ring. From these standpoints, it is more preferable if the amount of S is smaller. Specifically, the amount is equal to or less than 0.03% by weight and particularly preferably equal to or less than 0.01% by weight.

Still another typical impurity is N. N impairs the hot processability of the steel. Furthermore, N forms an inclusion which is a nitride, to decrease the fatigue strength of the piston ring. From this standpoint, the amount of N is less than 0.04% by weight and particularly preferably equal to or less than 0.03% by weight.

In the present invention, the steel contains V. V shifts the deposition temperature of the carbide to the high temperature side. The wire 1 containing V has a sufficient hardness after the tempering. A piston ring obtained from the wire 1 is excellent in strength. V binds to C to form a carbide. The carbide contributes to the wear resistance of the piston ring. From these standpoints, the amount of V is equal to or greater than 0.03% by weight and particularly preferably equal to or greater than 0.04% by weight. In light of cold processability of the wire 1, the amount is equal to or less than 0.15% by weight and particularly preferably equal to or less than 0.10% by weight.

The most characteristic elements in the composition of the steel for the wire 1 according to the present invention are Mo and V. As described above, because of the tempering at a high temperature, a wire 1 having a low change ratio P1 is obtained. Meanwhile, the tempering at a high temperature promotes deposition of the carbide. Mo and V shift the deposition temperature of the carbide to the high temperature side. In the wire 1 made of the steel containing Mo or V, softening by the tempering is suppressed. The wire 1 is excellent in strength.

The wire 1 is manufactured through steps such as steelmaking, hot rolling, annealing, drawing, cold rolling, quenching, tempering, and the like. By cooling after the hot rolling, a carbide deposits in the raw wire. The carbide grows and becomes spheroidized during the annealing. During the drawing, cold processing and annealing are repeated, whereby the carbide further grows. The carbide contains Fe, Cr and Mo. The carbide can contain V. By quenching at an appropriate temperature, a portion of the carbide is solid-dissolved. By the quenching, a structure containing martensite and carbides is obtained. By setting the quenching temperature to a high temperature, an ideal structure is obtained. The quenching temperature is preferably equal to or higher than 1070°C. During the tempering, the carbide grows. Furthermore, a new carbide deposits during the tempering. By the tempering, a tough wire 1 is obtained.

The wire 1 has an area ratio P2 of 10% or less. The area ratio P2 is measured by observing the structure of the wire 1 in a transverse section thereof with an optical microscope. The transverse section is a cross section along a plane perpendicular to a rolling direction. The area ratio P2 is calculated by analysis of an image of the cross section. The area of the image is 1684 $\mu m^2$. When the area of the image is defined as S1 and the total area of carbide particles which are present in the image and have a circle-equivalent diameter of 0.2 $\mu$m or greater but 5 $\mu$m or less is defined as S2, the area ratio P2 is calculated by the following mathematical formula.

$$P2 = (S2 / S1) * 100$$

The total area S2 is calculated by image processing. The resolution of the processing is 0.0645 $\mu$m/pixel. Prior to capturing of an image for the calculation, electrolytic etching is performed on the cross section of the wire 1. The conditions of the electrolytic etching are as follows.

Etchant: Oxalic acid aqueous solution
(concentration: 10% by weight)
Temperature: 20°C
Voltage: 3V
Etching time: 3 seconds

The circle-equivalent diameter means the diameter of a circle that is assumed to have the same area as the area of each carbide particle. The area of the carbide particle that has a circle-equivalent diameter of less than 0.2 $\mu$m is very small. Therefore, the carbide particle that has a circle-equivalent diameter of less than 0.2 $\mu$m has a small influence on the area ratio. The frequency of appearance of the carbide particle that has a circle-equivalent diameter exceeding 5 $\mu$m is very low. Therefore, the carbide particle that has a circle-equivalent diameter exceeding 5 $\mu$m has a small influence on the area ratio. In view of these circumstances, in the present invention, the area ratio P2 is calculated on the basis of the total area S2 of the carbide particles having a circle-equivalent diameter of 0.2 $\mu$m or greater but 5 $\mu$m or less.

In the wire 1 having an area ratio P2 of 10% or less, a sufficient amount of C is solid-dissolved in Fe. The wire 1 has a high hardness. A piston ring obtained from the wire 1 is excellent in strength. In light of strength, the area ratio P2 is particularly preferably equal to or less than 8.5%.

As described above, the tempering temperature in a process of manufacturing the wire 1 is high. In the wire 1, the change ratio P1 of the end gap 4 is low. The higher the tempering temperature is, the more a carbide deposits. In other words, the higher the tempering temperature is, the higher the area ratio P2 tends to be. In the wire 1 according to the present invention, both a low change ratio P1 and a low area ratio P2 are achieved.

First means for achieving both a low change ratio P1 and a low area ratio P2 is to add Mo or V to the steel. As described above, Mo and V shift the deposition temperature of the carbide to the high temperature side.

Second means for achieving both a low change ratio P1 and a low area ratio P2 is to adjust the structure of the steel prior to tempering. With a structure containing a fine carbide having a uniform size, even if the tempering temperature is high, a hardness suitable for a piston ring is achieved.

In light of strength of the piston ring, the density D of the carbide particles having a circle-equivalent diameter of 0.2 $\mu$m or greater but 5 $\mu$m or less in the structure in the transverse section of the wire 1 is preferably equal to or less than 250 particles/1000 $\mu$m$^2$ and particularly preferably equal to or less than 225 particles/1000 $\mu$m$^2$.

The Vickers hardness Hv of the wire 1 is preferably equal to or greater than 350 but equal to or less than 450. A piston ring obtained from the wire 1 having a hardness Hv of 350 or greater is excellent in strength. From this standpoint, the hardness Hv is particularly preferably equal to or greater than 360. The wire 1 having a hardness Hv of 450 or less is excellent in processability during coiling. From this standpoint, the hardness Hv is particularly preferably equal to or less than 440. The hardness Hv is measured according to the standards of "JIS Z 2244".

EXAMPLES

The following will show effects of the present invention by means of examples, but the present invention should not be construed in a limited manner based on the description of these examples.

[Example 1]

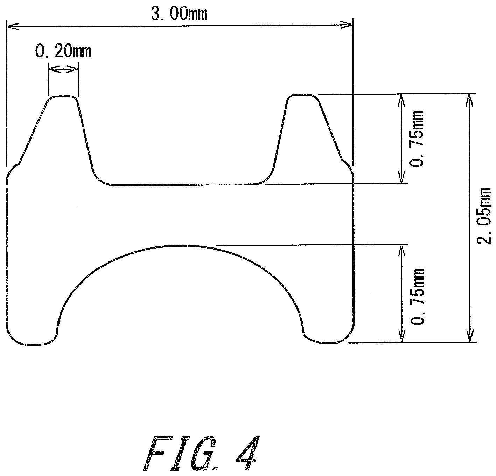

An ingot was obtained from a molten metal whose components were adjusted. Hot rolling, annealing, cold drawing, and cold rolling were performed on the ingot to obtain an raw wire. Quenching was performed on the raw wire. The quenching temperature was 1070°C. Tempering was performed on the raw wire to obtain a wire of Example 1. The tempering temperature was 664°C. As a result of observing a transverse section of the wire, the area ratio P2 was 8.45%, and the density D was 221 particles/1000 $\mu$m$^2$. The Vickers hardness Hv of the wire was 421. A transverse-sectional shape of the wire is shown in FIG. 4.

[Examples 2 to 6 and Comparative Examples 1 and 2]

Wires of Examples 2 to 6 and Comparative Examples 1 and 2 were obtained in the same manner as Example 1, except the tempering temperature was as shown in Tables 2 and 3 below.

[Examples 7 to 10 and Comparative Examples 3 and 4]

Wires of Examples 7 to 10 and Comparative Examples 3 and 4 were obtained in the same manner as Example 1, except the amount of Mo was as shown in Table 4 below.

[Examples 11 to 14]

Wires of Examples 11 to 14 were obtained in the same manner as Example 1, except the amount of V was as shown in Table 5 below.

[Measurement of Change Ratio]

Coiling was performed on a wire to form a ring having an end gap width of about 10 mm. Stress relief annealing was performed on the ring. The temperature of the stress relief annealing was 600°C. Furthermore, nitriding was performed on the ring to obtain a piston ring. The nitriding temperature was 570°C. The width of the end gap of the piston ring was measured, and a change ratio P1 was calculated. The average and the standard deviation of the change ratios P1 obtained from measurements of 10 rings are shown in Tables 2 to 5 below.

[Evaluation of Processability]

Coiling was performed on a wire to form 50 rings, and processability was determined. The determination was categorized on the basis of the following criteria.

A: No crack occurs. Variation of the widths of the end gaps after coiling is small.
B: No crack occurs. Variation of the widths of the end gaps after coiling is great.
C: Crack occurs.

The results are shown in Tables 2 to 5 below.

[Table 1]

Table 1 Composition of Steel (% by weight)

| No. | C | Si | Mn | Cr | Mo | V | P | S | N |
|-----|------|------|------|------|------|------|-------|-------|------|
| 1 | 0.63 | 0.18 | 0.62 | 13.0 | 0.03 | 0.05 | 0.021 | 0.006 | 0.03 |
| 2 | 0.60 | 0.20 | 0.65 | 12.5 | 0.20 | 0.05 | 0.020 | 0.006 | 0.03 |
| 3 | 0.64 | 0.23 | 0. 68 | 12.8 | 0.80 | 0.05 | 0.020 | 0.005 | 0.03 |
| 4 | 0.63 | 0.25 | 0.65 | 12.5 | 1.01 | 0.05 | 0.023 | 0.006 | 0.03 |
| 5 | 0.63 | 0.26 | 0.66 | 12.6 | 1.20 | 0.05 | 0.021 | 0.006 | 0.03 |
| 6 | 0.62 | 0.25 | 0.61 | 12.6 | 2.00 | 0.05 | 0.022 | 0.008 | 0.03 |
| 7 | 0.62 | 0.25 | 0.61 | 12.6 | 2.95 | 0.05 | 0.022 | 0.008 | 0.03 |
| 8 | 0.60 | 0.21 | 0.65 | 12.7 | 1.02 | 0.01 | 0.021 | 0.007 | 0.03 |
| 9 | 0.60 | 0.21 | 0.67 | 12.6 | 1.03 | 0.03 | 0.020 | 0.006 | 0.03 |
| 10 | 0.62 | 0.25 | 0.65 | 12.8 | 1.00 | 0.08 | 0.023 | 0.006 | 0.03 |
| 11 | 0.63 | 0.28 | 0.68 | 12.7 | 1.02 | 0.15 | 0.022 | 0.007 | 0.03 |
| Remaining portion: Fe and impurities | | | | | | | | | |

[Table 2]

Table 2 Results of Evaluation

| | Comp. Ex. 1 | Ex. 2 | Ex. 3 | Ex. 4 |
|---|---|---|---|---|
| Composition | 4 | 4 | 4 | 4 |
| Mo (% by weight) | 1.01 | 1.01 | 1.01 | 1.01 |
| V (% by weight) | 0.05 | 0.05 | 0.05 | 0.05 |
| Tempering temperature (°C) | 633 | 640 | 645 | 650 |
| Area ratio P2 (%) | 5.30 | 5.97 | 7.56 | 8.08 |
| Density D (/1000 $\mu m^2$) | 118 | 215 | 210 | 216 |
| Hardness Hv | 455 | 440 | 433 | 430 |
| Change ratio P1 | | | | |
| Average (%) | 23.3 | 12.3 | 5.0 | 4.5 |
| Standard deviation | 0.65 | 0.56 | 0.37 | 0.35 |

(continued)

|  | Comp. Ex. 1 | Ex. 2 | Ex. 3 | Ex. 4 |
|---|---|---|---|---|
| Processability | B | B | A | A |

[Table 3]

Table 3 Results of Evaluation

|  | Ex. 1 | Ex. 5 | Ex. 6 | Comp. Ex. 2 |
|---|---|---|---|---|
| Composition | 4 | 4 | 4 | 4 |
| Mo (% by weight) | 1.01 | 1.01 | 1.01 | 1.01 |
| V (% by weight) | 0.05 | 0.05 | 0.05 | 0.05 |
| Tempering temperature (°C) | 664 | 680 | 700 | 720 |
| Area ratio P2 (%) | 8.45 | 8.38 | 8.85 | 10.28 |
| Density D (/1000 $\mu$m$^2$) | 221 | 221 | 245 | 271 |
| Hardness Hv | 421 | 407 | 376 | 343 |
| Change ratio P1 |  |  |  |  |
| Average (%) | 2.3 | 2.2 | 8.5 | 25.5 |
| Standard deviation | 0.35 | 0.36 | 0.41 | 0.66 |
| Processability | A | A | A | B |

[Table 4]

Table 4 Results of Evaluation

|  | Comp. Ex. 3 | Ex. 7 | Ex. 8 | Ex. 9 | Ex. 10 | Comp. Ex. 4 |
|---|---|---|---|---|---|---|
| Composition | 1 | 2 | 3 | 5 | 6 | 7 |
| Mo (% by weight) | 0.03 | 0.20 | 0.80 | 1.20 | 2.00 | 2.95 |
| V (% by weight) | 0.05 | 0.05 | 0.05 | 0.05 | 0.05 | 0.05 |
| Tempering temperature (°C) | 664 | 664 | 664 | 664 | 664 | 664 |
| Area ratio P2 (%) | 11.38 | 9.82 | 8.11 | 8.48 | 9.43 | 10.6 |
| Density D (/1000 $\mu$m$^2$) | 265 | 218 | 216 | 220 | 240 | 261 |
| Hardness Hv | 340 | 397 | 416 | 425 | 441 | 462 |
| Change ratio P1 |  |  |  |  |  |  |
| Average (%) | 45.9 | 6.6 | 3.0 | 2.1 | 5.9 | - |
| Standard deviation | 0.86 | 0.41 | 0.37 | 0.32 | 0.37 | - |
| Processability | B | A | A | A | B | C |

[Table 5]

Table 5 Results of Evaluation

| | Ex. 11 | Ex. 12 | Ex. 13 | Ex. 14 |
|---|---|---|---|---|
| Composition | 8 | 9 | 10 | 11 |
| Mo (% by weight) | 1.02 | 1.03 | 1.00 | 1.02 |
| V (% by weight) | 0.01 | 0.03 | 0.08 | 0.15 |
| Tempering temperature (°C) | 664 | 664 | 664 | 664 |
| Area ratio P2 (%) | 9.55 | 8.27 | 7.59 | 7.32 |
| Density D (/1000 $\mu m^2$) | 239 | 225 | 212 | 198 |
| Hardness Hv | 418 | 415 | 433 | 447 |
| Change ratio P1 | | | | |
| Average (%) | 17.2 | 3.1 | 2.2 | 3.5 |
| Standard deviation | 0.58 | 0.38 | 0.32 | 0.35 |
| Processability | A | A | A | A |

As shown in Tables 2 to 5, the wire for piston rings according to each Example is excellent in various performance characteristics. From the results of evaluation, advantages of the present invention are clear.

INDUSTRIAL APPLICABILITY

Even if the diameter of a ring is increased by thermal treatment, variation of the width of the end gap of a piston ring can be suppressed by the wire according to the present invention.

The wire according to the present invention can exert its effects also on a piston ring obtained through a coiling step based on Slinky, a stress relief annealing step, a nitriding step, and a cutting step.

DESCRIPTION OF THE REFERENCE CHARACTERS

1 wire

2 one end

3 another end

4 end gap

**Claims**

1. A wire for piston rings, wherein
   the wire is made of steel which consists of:

   0.50 to 0.80% by weight of C,
   0.05 to 1.00% by weight of Si,
   0.2 to 1.00% by weight of Mn,
   11.0 to 14.0% by weight of Cr,
   0.20 to 2.0% by weight of Mo,
   0.03 to 0.15% by weight of V,

   and the remaining portion being Fe and impurities, of which P is limited to 0.05% by weight, S is limited to 0.03% by weight and N is limited to 0.04% by weight,

an area ratio of carbide particles having a circle-equivalent diameter of 0.2 $\mu$m or greater but 5 $\mu$m or less in a structure in a transverse section of the wire is equal to or less than 10%, and
a Vickers hardness of the wire is equal to or greater than 350 but equal to or less than 450.

2. The wire according to claim 1, wherein an amount of Mo in the steel is equal to or greater than 0.80% by weight but equal to or less than 1.20% by weight.

3. The wire according to claim 1, wherein a density of the carbide particles having a circle-equivalent diameter of 0.2 $\mu$m or greater but 5 $\mu$m or less in the structure in the transverse section is equal to or less than 250 particles/1000 $\mu$m$^2$.

4. The wire according to claim 1, wherein
the wire is obtained through quenching and tempering, and
a temperature of the tempering is equal to or higher than 645°C.

**Patentansprüche**

1. Draht für Kolbenringe, wobei
der Draht aus Stahl hergestellt, welcher besteht aus:

0,50 bis 0,80 Gew.-% C,
0,05 bis 1,00 Gew.-% Si,
0,2 bis 1,00 Gew.-% Mn,
11,0 bis 14,0 Gew.-% Cr,
0,20 bis 2,0 Gew.-% Mo,
0,03 bis 0,15 Gew.-% V,

und der restliche Anteil Fe und Verunreinigungen ist, von denen P auf 0,05 Gew.-% begrenzt ist, S auf 0,03 Gew.-% begrenzt ist und N auf 0,04 Gew.-% begrenzt ist,
ein Flächenverhältnis von Carbidpartikeln mit einem Kreisäquivalentdurchmesser von 0,2 $\mu$m oder größer aber 5 $\mu$m oder weniger in einer Struktur in einem Querschnitt des Drahtes gleich oder kleiner als 10% ist,
und
eine Vickers-Härte des Drahts gleich oder größer als 350 aber gleich oder kleiner als 450 ist.

2. Draht nach Anspruch 1, wobei eine Menge an Mo in dem Stahl gleich oder größer als 0,80 Gew.-% aber gleich oder kleiner als 1,20 Gew.-% ist.

3. Draht nach Anspruch 1, wobei eine Dichte der Carbidpartikel mit einem Kreisäquivalentdurchmesser von 0,2 $\mu$m oder größer aber 5 $\mu$m oder kleiner in der Struktur in dem Querschnitt gleich oder kleiner als 250 Partikel/1000 $\mu$m$^2$ ist.

4. Draht nach Anspruch 1, wobei
der Draht durch Abschrecken und Tempern erhalten ist, und eine Temperatur des Temperns gleich oder höher als 645°C ist.

**Revendications**

1. Fil métallique pour segments de piston, dans lequel le fil est réalisé en acier qui est composé de :

0,50 à 0,80 % en poids de C,
0,05 à 1,00 % en poids de Si,
0,2 à 1,00 % en poids de Mn,
11,0 à 14,0 % en poids de Cr,
0,20 à 2,0 % en poids de Mo,
0,03 à 0,15 % en poids de V, la partie restante étant du Fe et des impuretés, parmi lesquelles P est limité à 0,05 % en poids, S est limité à 0,03 % en poids et N est limité à 0,04 % en poids,

un rapport de surface des particules de carbure ayant un diamètre équivalent à un cercle de 0,2 $\mu$m ou plus mais

5 $\mu$m ou moins dans une structure dans une section transversale du fil est égal ou inférieur à 10 %, et une dureté Vickers du fil est égale ou supérieure à 350 mais égale ou inférieure à 450.

2. Fil selon la revendication 1, dans lequel une quantité de Mo dans l'acier est égale ou supérieure à 0,80 % en poids, mais égale ou inférieure à 1,20 % en poids.

3. Fil selon la revendication 1, dans lequel une densité des particules de carbure ayant un diamètre équivalent à un cercle de 0,2 $\mu$m ou plus mais 5 $\mu$m ou moins dans la structure dans la section transversale est égale ou inférieure à 250 particules/1000 $\mu$m$^2$.

4. Fil selon la revendication, dans lequel
le fil est obtenu par trempage et par températion, et
une température de la températion est égale ou supérieure à 645° C.

## FIG. 1

FIG. 2

*FIG. 3*

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005344134 A
- US 6224687 B1
- JP H06221436 A
- JP H06259048 A